(19) **Europäisches Patentamt**

**European Patent Office**

**Office européen des brevets**

(11) **EP 0 696 303 B1**

(12) **EUROPEAN PATENT SPECIFICATION**

(45) Date of publication and mention
of the grant of the patent:
**16.06.1999 Bulletin 1999/24**

(21) Application number: **94915876.0**

(22) Date of filing: **25.04.1994**

(51) Int Cl.⁶: **C08L 51/06**, C08L 23/08

(86) International application number:
**PCT/US94/04512**

(87) International publication number:
**WO 94/25526 (10.11.1994 Gazette 1994/25)**

(54) **BLENDS OF GRAFT-MODIFIED SUBSTANTIALLY LINEAR ETHYLENE POLYMERS AND OTHER THERMOPLASTIC POLYMERS**

MISCHUNGEN VON PFROPFMODIFIZIERTEN IM WESENTLICHEN LINEAREN ETHYLENPOLYMEREN UND ANDEREN THERMOPLASTISCHEN POLYMEREN

MELANGES DE POLYMERES D'ETHYLENE SENSIBLEMENT LINEAIRES ET MODIFIES PAR GREFFE ET D'AUTRES POLYMERES THERMOPLASTIQUES

(84) Designated Contracting States:
**BE DE ES FR GB IT NL SE**

(30) Priority: **28.04.1993 US 54376**

(43) Date of publication of application:
**14.02.1996 Bulletin 1996/07**

(73) Proprietor: **THE DOW CHEMICAL COMPANY
Midland, Michigan 48674 (US)**

(72) Inventors:
 • **HUGHES, Morgan, M.
   Angleton, TX 77515 (US)**
 • **KUMMER, Kyle, G.
   Lake Jackson, TX 77566 (US)**
 • **BETSO, Stephen, R.
   CH-8810 Horgen (CH)**
 • **ROWLAND, Michael, E.
   Lake Jackson, TX 77566 (US)**
 • **EDMONDSON, Morris, S.
   Alvin, TX 77511 (US)**

(74) Representative:
**Smulders, Theodorus A.H.J., Ir. et al
Vereenigde Octrooibureaux
Nieuwe Parklaan 97
2587 BN 's-Gravenhage (NL)**

(56) References cited:
**EP-A- 0 286 734          WO-A-88/03475
US-A- 5 278 272**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 696 303 B1

## Description

This invention relates to elastic, substantially linear ethylene polymers. In one aspect, this invention relates to such polymers grafted with an unsaturated organic compound, for example, maleic anhydride, while in another aspect, the invention relates to blends of this grafted polymer with one or more other thermoplastic polymers, for example, a polyester or a polyamide. In still another aspect, this invention relates to such blends in combination with a filler. In yet another aspect, this invention relates to such blends further comprising one or more other olefin polymers, either grafted or ungrafted.

The art is replete with concern for improving the toughness (also known as ductility) of various thermoplastic resins, for example, polyesters, polyamides. The toughness or ductility of a thermoplastic resin is typically measured by use of the notched IZOD impact test (ASTM D-256). However, the art typically discusses thermoplastic toughness in the context of ambient temperature with little, if any; recognition of the desirability of thermoplastic toughness in many applications at low temperature (less than 0°C). Moreover, not only do most commercially available thermoplastic resins have less than desirable impact resistance at low temperatures, but most also have less than desirable optical and other physical properties.

The graft modification of polyolefins, such as polyethylene and polypropylene, with various unsaturated monomers is also well known in the art. Such a modification renders an essentially nonpolar material compatible, at least to some limited extent, with a polar material. This, in turn, impacts an certain of the properties of the polyolefin, for example, its ability to adhere or laminate to a solid. For example, USP 4,198,327 teaches a modified crystalline polyolefin composition having improved adhesion to polar solid materials. USP 4,397,916 and 5,055,526 also teach adhesive resin compositions of modified polyolefins and laminates made from such polyolefins.

EP-A-0 286 734 discloses a linear ethylene (to)polymer grafted with 0.2 to 20 percent by weight of an unsaturated organic compound (e.g., maleic acid) and having a density of greater than 0.870 $g/cm^3$ and up to 0.910 $g/cm^3$, a melt flow index ($I_2$) of 0.01 to 50 g/10 min which is alleged to be suitable for impact modification of thermoplastic resins.

As these references suggest, much of the existing art is primarily concerned with the modification of these polyolefins to develop compositions having specific adhesive properties or improvements in adhesive properties. However, not only do these references discuss lightly or not at all the possible advantageous influence that these graft-modified resin can have on these compositions, but some note that these resins can actually have a detrimental influence on one or more properties of the polyolefin and/or the composition. For example, USP 4,134,927; 3,884,882 and 5,140,074 all report undesirable changes in the rheological properties due to crosslinking of the modified material. These changes ultimately impact the processibility of the material and thus, its utility in commercial applications.

The subject invention is directed to, thermoplastic compositions characterized as a substantially homogeneous blend of at least one thermoplastic polymer and at least one substantially linear ethylene homo-, co-, or interpolymer grafted with at least 0.01 wt.%, based on the weight of the grafted ethylene polymer, of an unsaturated organic compound containing at least one site of ethylenic unsaturation and at least one carboxyl group, the ethylene homo-, co- or interpolymer characterized as having:

(i) a melt flow ratio, $I_{10}/I_2$ from 6.5 to 15;
(ii) a molecular weight distribution, $M_w/M_n$, of from 1.8 to 2.5 as measured by gel permeation chromatography;
(iii) a density greater than 0.850 $g/cm^3$;
(iv) a critical shear rate at onset of surface melt fracture of at least 50 percent greater than the critical shear rate at the onset of surface melt fracture of a linear olefin polymer having about the same $I_2$ and $M_w/M_n$; and
(v) from 0.01 to 3 long chain branches/ 1000 carbons wherein a long chain branch has a chain length of at least 6 carbon atoms.

The inventive compositions demonstrate desirable impact resistance at both ambient and low temperatures as well as desirable optical properties and small particle sizes relative to known polymers. The thermoplastic compositions of this invention can be either filled or unfilled. In one embodiment of the invention, these compositions can further comprise one or more other polyolefins either grafted or ungrafted.

Figure 1 reports comparative notched IZOD impact energy data at ambient temperature for PBT and various blends of PBT with maleic anhydride grafted substantially linear ethylene polymer (MAH-g-ITP), maleic anhydride grafted ethylene-propylene rubber (MAH-g-EPR), and maleic anhydride grafted ethylene-propylene-diene monomer (MAH-g-EPDM), respectively.

Figure 2 reports comparative Dynatup impact energy data at (-20°F) -28,8°C for PBT and the same blends as identified in Figure 1.

Figure 3 reports comparative notched IZOD impact energy data at ambient temperature for poly(butylene terephthalate) (PBT) and various blends of PBT with a maleic anhydride grafted substantially linear ethylene polymer (MAH-g-ITP) and a maleic anhydride grafted Tafmer™ resin (MAH-g-Tafmer).

### DESCRIPTION OF THE PREFERRED EMBODIMENTS

The substantially linear ethylene polymers used in the practice of this invention are known, and they and their method of preparation are fully described in USP 5,272,236 and USP 5,278,272. As here used, "substantially linear" means that the polymer backbone is substituted with from 0.01 long-chain branches/1000 carbons to 3 long-chain branches/1000 carbons, preferably from 0.01 long-chain branches/1000 carbons to 1 long-chain branch/1000 carbons, more preferably from 0.05 long-chain branches/1000 carbons to 1 long-chain branch/1000 carbons. Long-chain branching is here defined as a chain length of at least about 6 carbon atoms, above which the length cannot be distinguished using $^{13}C$ nuclear magnetic resonance spectroscopy. However, the long-chain branch can be about the same length as the length of the polymer backbone.

These unique polymers (subsequently referred to as "CGC polymers") are prepared by using constrained geometry catalysts (CGC), and are characterized by a narrow molecular weight distribution and if an interpolymer, by a narrow comonomer distribution. As here used, "interpolymer" means a polymer of two or more comonomers, for example, a copolymer, terpolymer, etc., or in other words, a polymer made by polymerizing ethylene with at least one other comonomer. Other basic characteristics of these CGC polymers include a low residuals content (that is, low concentrations in the CGC polymer of the catalyst used to prepare the polymer, unreacted comonomers, and low molecular weight oligomers made during the course of the polymerization), and a controlled molecular architecture which provides good processability even though the molecular weight distribution is narrow relative to conventional olefin polymers.

While the CGC polymers used in the practice of this invention include elastic, substantially linear ethylene homopolymers, preferably the CGC polymers used in the practice of this invention comprise from 95 to 50 weight percent (wt %) ethylene, and from 5 to 50 wt % of at least one $\alpha$-olefin comonomer, more preferably 10 to 15 wt % of at least one $\alpha$-olefin comonomer. Typically, the CGC polymers are copolymers of ethylene and an $\alpha$-olefin of from 3 to 20 carbon atoms (for example, propylene, 1-butene, 1-hexene, 4-methyl-1-pentene, 1-heptene, 1-octene, styrene), preferably of from 3 to 10 carbon atoms. More preferably these polymers are a copolymer of ethylene and 1-octene. The density of these CGC polymers is typically from 0.850 to 0.935 grams per cubic centimeter (g/cm$^3$), preferably from 0.870 to 0.910 g/cm$^3$. The melt flow ratio, measured as $I_{10}/I_2$ (ASTM D-1238), is from 6.5 to 15, preferably from 7 to 10. The molecular weight distribution ($M_w/M_n$), measured by gel permeation chromatography (GPC) is from 1.8 to 2.5. For substantially linear ethylene polymers, the $I_{10}/I_2$ ratio indicates the degree of long-chain branching, that is the larger the $I_{10}/I_2$ ratio the more long-chain branching in the polymer.

According to Ramamurthy in Journal of Rheology, 30(2), 337-357, 1986, above a certain critical flow rate, surface melt fracture may occur, which may result in irregularities ranging from loss of specular gloss to the more severe form of "sharkskin". As used herein, the onset of surface melt fracture is characterized as the beginning of losing extrudate gloss at which the surface roughness of extrudate can only be detected by 40x magnification. The substantially linear ethylene polymers will further be characterized by a critical shear rate at the onset of surface melt fracture which is at least 50 percent greater than the critical shear rate at the onset of surface melt fracture of a linear olefin polymer having about the same $I_2$ and $M_w/M_n$.

The unique characteristic of the homogeneously branched, substantially linear ethylene polymers is a highly unexpected flow property where the $I_{10}/I_2$ value of the polymer is essentially independent of the polydispersity index (that is, $M_w/M_n$) of the polymer. This is contrasted with conventional linear homogeneously branched and linear heterogeneously branched polyethylene resins having rheological properties such that to increase the $I_{10}/I_2$ value the polydispersity index must also be increased.

The preferred melt index, measured as $I_2$ (ASTM D-1238, condition 190/2.16 (formerly condition E)), is from 0.5 g/10 min to 200 g/10 min, more preferably from 1 to 20 g/10 min. Typically, the preferred CGC polymers used in the practice of this invention are homogeneously branched and do not have any measurable high density fraction, that is, short chain branching distribution as measured by Temperature Rising Elution Fractionation which is described in USP 5,089,321. Stated in another manner, these polymers preferably do not contain any polymer fraction that has a degree of branching less than or equal to 2 methyls/1000 carbons. These preferred CGC polymers also usually exhibit a single differential scanning calorimetry (DSC) melting peak.

Any unsaturated organic compound containing at least one site of ethylenic unsaturation (for example, at least one double bond), at least one carboxyl group (-COOH), and that will graft to a CGC polymer as described above can be used in the practice of this invention. As here used, "carboxyl group" includes carboxyl groups per se and derivatives of carboxyl groups such as anhydrides, esters and salts (both metallic and nonmetallic). Preferably, the organic compound contains a site of ethylenic unsaturation conjugated with a carboxyl group. Representative compounds include maleic, acrylic, methacrylic, itaconic, crotonic, $\alpha$-methyl crotonic, and cinnamic acid and their anhydride, ester and salt derivatives, and fumaric acid and its ester and salt derivatives. Maleic anhydride is the preferred unsaturated organic compound containing at least one ethylenic unsaturation and at least one carboxyl group.

The unsaturated organic compound content of the grafted CGC polymer is at least 0.01 wt %, and preferably at least 0.05 wt %, based on the combined weight of the polymer and the organic compound. The maximum amount of unsaturated organic compound content can vary to convenience, but typically it does not exceed 10 wt %, preferably it does not exceed 5 wt %, and more preferably it does not exceed 2 wt % of the grafted CGC polymer.

The unsaturated organic compound can be grafted to the CGC polymer by any known technique, such as those taught in USP 3,236,917 and USP 5,194,509. For example, in the '917 patent the polymer is introduced into a two-roll mixer and mixed at a temperature of 60°C. The unsaturated organic compound is then added along with a free radical initiator, such as, for example, benzoyl peroxide, and the components are mixed at 30°C until the grafting is completed. In the '509 patent, the procedure is similar except that the reaction temperature is higher, for example, 210 to 300°C, and a free radical initiator is not used or is used at a reduced concentration.

An alternative and preferred method of grafting is taught in USP 4,950,541, by using a twin-screw devolatilizing extruder as the mixing apparatus. The CGC polymer and unsaturated organic compound are mixed and reacted within the extruder at temperatures at which the reactants are molten and in the presence of a free radical initiator. Preferably, the unsaturated organic compound is injected into a zone maintained under pressure within the extruder.

In one embodiment, the graft-modified CGC polymers act as compatibilizers for the filled compositions of this invention. Many molded and extruded products contain fillers, for example, silica, talc, glass, clay, carbon black, and the like, for strength and/or some other desirable property. Often these fillers are only marginally compatible with the resinous matrix within which they are incorporated and as such, the amount of filler that can be incorporated into the matrix, that is, the loading level, is limited. Compatibilizers are used to coat or otherwise treat the filler to render it more compatible with the matrix, and thus allow a higher loading than otherwise possible to be achieved. The graft-modified substantially linear ethylene polymers used in this invention are particularly desirable compatibilizers because higher loading levels can be achieved, that is either more filler can be incorporated into a given resin matrix based on the amount of compatibilizer, or less compatibilizer is required to incorporate the same amount of filler. In addition, the compatibilizers of this invention impart desirable properties to the composition in both fabricated and prefabricated form. In fabricated form, the strength and impact properties (both at ambient and low temperature) are enhanced relative to fabricated compositions devoid of grafted substantially linear ethylene polymer. In prefabricated form, the processability of the compositions are enhanced relative to compositions devoid of grafted substantially linear ethylene polymer.

The amount of graft-modified substantially linear ethylene polymer required to effectively serve as a compatibilizer will, of course, vary with the nature of the resinous matrix, the nature and amount of filler, and the chemical and physical characteristics of the substantially linear ethylene polymer and unsaturated organic compound containing a carboxyl group (and the extent of grafting). Typically, the weight ratio of graft-modified substantially linear ethylene polymer to filler is from 1:50 to 50:1, preferably from 1:40 to 20:1.

The graft-modified substantially linear ethylene polymer is dry blended or melt blended with other thermoplastic polymers to make the substantially homogeneous compositions of this invention, and then these compositions are molded or extruded into a shaped article. As here used, "substantially homogeneous" means that the components of the composition are sufficiently mixed with one another such that the make-up of one portion of the composition is substantially the same as that of any other portion of the composition. Such other thermoplastic polymers include any polymer with which the grafted substantially linear ethylene polymer is compatible, and include both olefin and non-olefin polymers, grafted and ungrafted. The grafted substantially linear ethylene polymer can also be blended with another substantially linear ethylene polymer, a conventional heterogeneously branched or homogeneously branched linear ethylene polymer, a non-olefin polymer, any of which can be grafted or ungrafted, or any combination of these polymers. Examples of such polymers include high density polyethylene (HDPE), low density polyethylene (LDPE), linear low density polyethylene (LLDPE), ultra low density polyethylene (ULDPE), polypropylene, ethylene-propylene copolymer, ethylene-styrene copolymer, polyisobutylene, ethylene-propylene-diene monomer (EPDM), polystyrene, acrylonitrile-butadiene-styrene copolymer (ABS), ethylene-acrylic acid (EAA), ethylene/vinyl acetate (EVA), ethylene/vinyl alcohol (EVOH), polymers of ethylene and carbon monoxide (ECO, including those described in USP 4,916,208), or ethylene, propylene and carbon monoxide (EPCO) polymers, or of ethylene, carbon monoxide and acrylic acid (ECOAA) polymers, and the like. Representative of the non-olefin polymers are the polyesters, polyvinyl chloride (PVC), epoxies, polyurethanes, polycarbonates, polyamides, and the like. These blending polymers are characterized by a compatibility with the grafted substantially linear ethylene polymer such that the melt blend does not exhibit gross phase separation, that is a separation in which the individual components of the blend are visible to the unaided eye, after thorough blending and during subsequent processing of the blend. If more than one of these polymers is blended with one or more grafted substantially linear ethylene polymers, then all usually exhibit sufficient compatibility with each other, one-to-one or at least in combination with one or more other polymers, such that the polymeric components do not exhibit gross phase separation which could lead to extrusion processing difficulties, such as extrudate surging, and film band-effects.

The amount of graft-modified substantially linear ethylene polymer that is blended with one or more other polymers is dependent upon many factors, including the nature of the other polymer or polymers, the intended end use of the blend, and the presence or absence and the nature of additives. For molded articles, particularly engineered materials (for example, hoses, shrouds, etc.) the grafted substantially linear ethylene polymer is blended with an engineering plastic, for example, polyamide or polyester, such that the blended composition typically comprises from 2 to 70 wt %, preferably from 5 to 30 wt % of the graft modified substantially linear ethylene polymer(s) on a total weight basis. In those applications in which the grafted substantially linear ethylene polymer is blended with other polyolefin polymers, for example, a nongrafted substantially linear ethylene polymer or a conventional polyolefin polymer (LLDPE, HDPE, PP, etc.), the blend typically comprises from 2 to 70 wt %, preferably from 5 to 30 wt %, of the graft-modified substantially linear ethylene polymer. Wire and cable are end use applications for such polymer blends. The presence of the graft-modified substantially linear ethylene polymer in these blends, both for engineered materials and wire and cable, provides improved impact and/or strength properties to the compositions.

In other embodiments, the graft-modified substantially linear ethylene polymer comprises from a relatively minor amount (for example, 10 wt %), up to a substantial majority, for example, 90 wt %, of the finished article. In those applications in which the paintability of the finished article is of importance, incorporation from 30 to 70 wt % of a graft-modified substantially linear ethylene polymer will impart desirable paintability properties to an otherwise unpaintable molded article, for example, an article prepared from a polyolefin such as polyethylene and polypropylene.

As noted above, the polymer blends in which the graft-modified substantially linear ethylene polymer is incorporated can include other additives, such as fillers, colorants, antioxidants, antistats, slip agents, tackifiers, and fragrances. These additives are incorporated by known methods in known amounts.

In another embodiment of this invention, the grafted substantially linear ethylene polymer is "let-down" or diluted with virgin substantially linear ethylene polyolefin or another grafted substantially linear ethylene polymer prior to mixing it with a blending polymer. For example, after the grafted substantially linear ethylene polymer has been prepared as described in USP 4,950,541, it is then back-blended in an extruder with virgin substantially linear ethylene polymer to a predetermined dilution. Let-down or dilution ratios will vary with the ultimate application of the grafted substantially linear ethylene polymer, but weight ratios from 1:10 to 10:1 are typical.

The grafted substantially linear ethylene polymers used in the practice of this invention, and the compositions comprising these polymers, are more fully described in the following examples. Unless indicated to the contrary, the substantially linear ethylenes used in the examples are prepared in accordance with the techniques set forth in USP 5,272,236 via a solution polymerization process utilizing a $[\{(CH_3)_4C_5)\}-(CH_3)_2 Si-N-(t-C_4H_9)]Ti(CH_3)_2$ organometallic catalyst activated with tris(perfluorophenyl)borane. Unless indicated to the contrary, all parts and percentages are by weight, total weight basis. Unless indicated to the contrary, the following test procedures are utilized:

| 1. | Notched IZOD Impact (ft-lb/in) | ASTM D-256 (at 23° C, 0°C, -18°C, -29°C and -40°C) |
|---|---|---|
| 2. | Tensile (psi) | ASTM D-638 |
| 3. | Yield (psi) | ASTM D-638 |
| 4. | Elongation (%) | ASTM D-638 |
| 5. | Whiteness Index (WI) | ASTM E-313 |
| 6. | Yellowness Index (YI) | ASTM E-313 |
| 7. | Particle Size (microns) | Electron micrographs of microtomed molded test samples |
| 8. | Dynatup | ASTM D-3763-86 (at -29°C) |

SPECIFIC EMBODIMENTS

Sample Preparation

All samples were prepared by feeding polymer as described in Table 1 into a Werner-Pfleiderer ZSK-53/5L to-rotating twin screw extruder operated at the conditions described in Table 2. After the polymer was fed into the extruder, a mixture of maleic anhydride (MAH)/methyl ethyl ketone (MEK)/LUPERSOL 130 (Initiator) at a weight ratio of 1:1:0.032, respectively, was fed into the end of Zone 1 of the extruder through an injection nozzle by a metering pump. LUPERSOL 130 is 2,5-di(t-butyl peroxy)hexyne-3 manufactured and sold by Atochem. The extruder was maintained at a vacuum level of greater than or equal to 26 inches of mercury (88 kPa) to facilitate devolatization of solvent, unreacted MAH and other contaminates. The percent of incorporation of MAH into each polymer is also reported in Table 1. Example C1 is an ultralow density ethylene/1-octene resin manufactured and sold by The Dow Chemical Company under the tradename ATTANE. Example C2 is Dowlex® 2517 resin, a LLDPE ethylene/1-octene resin manufactured and sold by The Dow Chemical Company. Example C3 is Tafmer® P-0180 resin, an ethylene/propylene copolymer resin manufactured and sold by Mitsui Petrochemical. Examples C1, C2 and C3 are comparative examples.

The resin used in Examples 1-4 was a substantially linear ethylene polymer of ethylene and 1-octene.

TABLE I

| Incorporation of Maleic Anhydride into Conventional and Substantially Linear Ethylene Polymers | | | | |
|---|---|---|---|---|
| Example | Melt Index* ($I_2$) | Density* (g/cm$^3$) | Melt Flow Ratio* $I_{10}/I_2$ | % Incorporation |
| C1 | 3.4 | 0.906 | 7.65 | 40.2 |
| C2 | 25.0 | 0.917 | - | 25.3 |
| C3 | 5.0 | 0.870 | 5.91 | 48.9 |
| 1 | 7.0 | 0.903 | 7.57 | 68.9 |
| 2 | 5.0 | 0.871 | 7.66 | 57.3 |
| 3 | 0.75 | 0.870 | 7.58 | 62.3 |
| 4 | 25.0 | 0.870 | - | 30.6 |

*Ungrafted polymer

TABLE 2

| Extruder Operation Conditions | | | | | | | |
|---|---|---|---|---|---|---|---|
| Barrel Temp (°C) | C1 | C2 | C3 | 1 | 2 | 3 | 4 |
| | | | | | | | |
| Zone 1 | 164 | 156 | 177 | 142 | 140 | 150 | 162 |
| Zone 2 | 191 | 193 | 200 | 176 | 186 | 195 | 154 |
| Zone 3 | 201 | 198 | 202 | 195 | 206 | 198 | 203 |
| Zone 4 | 236 | 206 | 200 | 180 | 192 | 221 | 207 |
| | | | | | | | |
| Polymer Melt Temp (°C) | 177 | 162 | 162 | 173 | 162 | 163 | N/A* |
| Screw Speed (rpm) | 300 | 300 | 320 | 320 | 255 | 300 | 320 |
| Polymer Feed Rate (lb per hr/ kg per hr) | 150/ 68.2 | 150/ 68.2 | 135/ 61.4 | 150/ 68.2 | 130/ 59.1 | 135/ 61.4 | 135/ 61.4 |
| MAH/MEK/Initiator Feed Rate (lb per hr/ kg per hr) | 6.45/ 2.93 | 5.92/ 2.69 | 5.96/ 2.71 | 5.57/ 2.53 | 5.90/ 2.68 | 5.84 / 2.65 | 5.46 / 2.48 |

* N/A = Not Available

The data of Table 1 show that the grafting of a substantially linear ethylene polymer is more efficient than the grafting of a non-substantially linear ethylene polymer having similar physical properties of melt index, density, and melt flow ratio. The polymer of Example 1 is a substantially linear ethylene polymer with a melt index of 7.0 g/10 min and a density of 0.903 g/cm$^3$, with 68.9% of the MAH being incorporated into it. In comparison, the polymer of Comparative Example 1 is a non-substantially linear ethylene polymer (ULDPE) with a melt index of 3.4 g/10 min and a density of 0.906 g/cm$^3$, which incorporated only 40.2% of the MAH under similar conditions. The substantially linear ethylene polymer incorporated 70% more MAH under similar conditions than did the comparative non-substantially linear ethylene polymer. These results mean that the graft-modified substantially linear ethylene polymers of this invention can be prepared with lower loss of materials (that is lower levels of MAH required to obtain the same level of grafting as for non-substantially linear ethylene polymers), and lower emissions due to the use of less volatiles.

Adhesive Properties

The adhesive properties of the grafted polymer samples of Comparative Example 1 and Example 1 were determined by heat seal lamination. The graft-modified polymers were fabricated into blown film having a thickness of 0.003 inches (0.008 cm). Film test samples, one inch (2.5 cm) in width, were cut from the blown film and heat sealed to polypropylene (PF-101, available from Pacur, Inc.), polyamide (Nylon 6, available from Capron-Allied Co.), ethylene/vinyl alcohol (Soranol™ D, available from Nippon Chemical Co.), polycarbonate (Lexan™, available from General Electric Plastics) and polyetherimide (Altem™, available from General Electric Plastics) films at selected temperatures. The heat seal conditions were 40 lb/in$^2$ (280 kPa) of pressure applied for 0.5 seconds by means of heated seal bars set at the desired temperature. The strength of the heat seals was determined on an Instron tensionmeter apparatus using a 180 degree ("T") pull at a crosshead speed of 2 in/min (5 cm/min). The data from these tests are reported in Table 3.

TABLE 3

| Heat Seal Comparisons | | | |
|---|---|---|---|
| SUBSTRATE | TEMPERATURE (°C) | C1 FILM HEAT SEAL STRENGTH (lb. per in/kg per cm) | EX. 1 FILM HEAT SEAL STRENGTH (lb per in/kg per cm) |
| Polypropylene | 130 | 0 | 0 |
| | 140 | 0 | 0 |
| | 150 | 0.1/0.1 | 0.4/0.3 |
| | 160 | 0.3/0.3 | 1.1/0.95 |
| | 170 | 1.8/1.6 | 2.6/2.3 |
| | 180 | 2.0/1.7 | 2.82/4 |
| Polyamide | 130 | 0.6/0.5 | 1.0/0.87 |
| | 140 | 0.6/0.5 | 1.0/0.87 |
| | 150 | 1.0/0.87 | 1.5/1.3 |
| | 160 | 1.5/1.3 | 1.5/1.3 |
| | 170 | 2.0/4.3 | 2.14.5 |
| | 180 | 2.2/4.8 | film failure |
| Ethylene/vinyl alcohol | 130 | 1.3/2.8 | 1.0/0.87 |
| | 140 | 1.3/2.8 | 1.0/0.87 |
| | 150 | 1.3/2.8 | 1.2/2.6 |
| | 160 | 1.6/3.5 | 1.5/2.6 |
| | 170 | 2.0/4.3 | 2.0/4.3 |
| | 180 | 2.5/4.8 | 2.3/5.0 |
| Polycarbonate | 230 | 0.2/0.4 | 1.5/2.6 |
| Polyetherimide | 230 | 1.0/0.87 | 0.8/1.7 |

The film test samples of Example 1 gave improved adhesion to polypropylene, polyamide and polycarbonate substrates, as well as similar adhesion to EVOH and polyetherimide, as compared to the film test samples of Comparative Example 1. Additional improvements in the adhesive properties of the graft-modified substantially linear ethylene polymers can be realized with respect to changes in resin density and fabrication techniques, for example, extrusion lamination or multilayer extrusion. Improvement can also be obtained in the adhesive properties of such blends by using a grafted substantially linear ethylene polymer that has been back-blended or let-down with an ungrafted substantially linear ethylene polymer.

Impact Properties

The use of graft-modified substantially linear ethylene polymers to improve the impact properties of various polymer blends was evaluated by incorporating the polymer into a polyamide resin (CAPRON 8207, manufactured and sold by Allied-Signal). Melt blends of the polyamide with 0, 10 and 25 wt % of the graft-modified substantially linear ethylene polymer were prepared on an extruder prior to molding on an injection molding machine. The injection molded test samples (IZOD specimens) were evaluated for room temperature notched IZOD impact performance. The formulations and results are reported in Table 4.

TABLE 4
IZOD Impact Comparisons

| BLEND COMPOSITION | | IZOD IMPACT (ft-lb per in/ J per cm) |
|---|---|---|
| POLYAMIDE (WT %) | MODIFIER (WT %) | |
| Polyamide (100%) | None | 1.3/0.69 |
| Polyamide (90%) | C1 (10%) | 2.7/1.4 |
| Polyamide (75%) | C1 (25%) | 15.4/8.22 |
| Polyamide (90%) | Ex. 1 (10%) | 4.0/2.1 |
| Polyamide (75%) | Ex. 1 (25%) | 16.1/8.59 |

As is evident from the data in this Table, polyamide blends containing the graft-modified substantially linear ethylene polymer have higher IZOD impact performance as compared to blends containing a similar graft-modified ULDPE, that is, Comparative Example 1. Additional improvements can be realized by lowering in the polymer density.

Compatibilization Properties

These properties were evaluated by blending the graft-modified substantially linear ethylene polymer of Example One with a base composition containing an unmodified substantially linear ethylene polymer (1 g/10 min MI, 0.902 g/cm$^3$ density), an inorganic filler (240 parts per hundred resin (phr) vinyl silane treated aluminum trihydrate), peroxide (5 phr Vulcup 40 KE available from Hercules Inc.), coagent (0.8 phr TAC - triallyl cyanurate, available from Union Carbide), and a hydrocarbon oil (80 phr Sunpar 2280 available from Sun Oil Company). Melt blends containing 0, 5 and 10 part of the graft-modified substantially linear ethylene polymer phr and 100, 95, and 90 parts ungrafted base resin were prepared on a small Banbury internal mixer. The blended samples were compression molded and evaluated for tensile strength properties before and after curing. The curing conditions were 1 minute at 400 °F (204 °C). The tensile strength properties for these blends are reported in Table 5.

TABLE 5

| Tensile Strength Properties | | | | |
|---|---|---|---|---|
| Sample | Ungrafted Base Resin (phr) | Ex 1 Level (phr) | Tensile Strength | |
| | | | Uncured (psi/kPa) | Cured (psi/kPa) |
| A | 100 | 0 | 709/4890 | 1243/8570 |
| B | 95 | 5 | 109777564 | 1486/10.250 |
| C | 90 | 10 | 1223/8432 | 1421/9797 |

As shown by the data in this Table, the incorporation of graft-modified substantially linear ethylene polymer into these compositions allows for compatibilization of an inorganic filler with a resin matrix resulting in higher tensile strength properties. In addition, higher tensile strength properties are obtained both before and after curing.

Processibility

The processibility of the graft-modified substantially linear ethylene polymers as compared to graft-modified non-substantially linear ethylene polymers was determined from the reduced melt viscosity vs. shear rate data obtained from capillary rheology evaluations at 190 C. In order to obtain these data, the apparent melt viscosity (poise) vs. apparent shear rate (l/seconds) data was generated according to the ASTM D-3835 method. The reduced melt viscosity data were calculated by dividing the melt viscosity (n) obtained at each shear rate by the melt viscosity (n*) measured at the lowest possible shear rate. For the condition used in these determinations, the lowest shear rate corresponds to 2.96 seconds$^{-1}$. An example of these reduced melt viscosity calculations are illustrated below.

Capillary Rheology Data

Apparent Melt Viscosity at 2.96 seconds$^{-1}$ = 74,800 poise (7480 Pa·s) (n*)
Apparent Melt Viscosity at 7.40 seconds$^{-1}$ = 46,400 (4640 Pa·s) poise (n)
Reduced Melt Viscosity at 2.96 seconds$^{-1}$ = 1.000 (n*/n*)
Reduced Melt Viscosity at 7.40 seconds$^{-1}$ = 0.620 (n/n*)

These reduced melt viscosity data are calculated from the lowest (2.96 seconds$^{-1}$) to the highest shear rate (2960 seconds$^{-1}$) obtained from the capillary rheology evaluations. These reduced melt viscosity data are reported in Table 6 for Comparative Examples 1 and 3 and Examples 1 and 2.

TABLE 6

| Reduced Melt Viscosity Data | | | | |
|---|---|---|---|---|
| Apparent Shear Rate (second $^{-1}$) | Reduced Melt Viscosity (x 10$^3$) | | | |
| | C1 | C3 | 1 | 2 |
| 2.96 | 1000 | 1000 | 1000 | 1000 |
| 7.40 | 620 | 610 | 600 | 600 |
| 14.80 | 450 | 450 | 430 | 420 |
| 29.60 | 330 | 330 | 300 | 295 |
| 74.00 | 220 | 220 | 190 | 185 |
| 148.00 | 150 | 150 | 130 | 125 |
| 296.00 | 110 | 90 | 90 | 85 |
| 740.00 | 60 | 58 | 51 | 48 |
| 1480.00 | 37 | N/A | 31 | 29 |
| 2960.00 | 22 | N/A | 19 | 18 |
| N/A = Not Available | | | | |

The data in Table 6 illustrate the effect of shear rate on melt viscosity (that is, reduced) for Comparative Example 1 vs. Example 1, and Comparative Example 3 vs. Example 2. These data show that the compositions of this invention have significantly lower melt viscosities as compared to the noninventive compositions at a variety of shear rates.

The percent difference between the reduced melt viscosity values for Example 1 and Comparative Example 1 were calculated at each corresponding shear rate. These data are reported in Table 7.

TABLE 7

| Calculated Percent Difference in Reduced Melt Viscosity (Ex 1 versus C1) | |
| --- | --- |
| Apparent Shear Rate (seconds$^{-1}$) | Percent Difference* in Reduced Melt Viscosity |
| 2.96 | 0.0 |
| 7.40 | 3.3 |
| 14.80 | 4.7 |
| 29.60 | 10.0 |
| 74.00 | 15.8 |
| 148.00 | 15.4 |
| 296.00 | 22.0 |
| 740.00 | 17.6 |
| 1480.00 | 19.4 |
| 2960.00 | 15.8 |

*Percent Difference Calculation (at 7.40 seconds$^{-1}$) $\frac{(620-600)}{600}$ x 100 = 3.3%

The percent difference data in Table 7 show that the graft-modified substantially linear ethylene polymers of this invention afford processability advantages over the graft-modified non-substantially linear ethylene polymers (the lower the melt viscosity at a given shear rate, generally the better the processibility of the polymer). Moreover, the magnitude of these differences increases with shear rate, The benefit of lower melt viscosities is improved extrusion processability, that is, lower extrudate energy consumption, nonsurging, and smoother extrudate.

Impact Properties of Certain Blends Containing Graft-modified Substantially Linear Ethylene Polymer

The following materials were used in this test: ADMER QF 500A, a polypropylene grafted wich 1.5 wt % MAH and manufactured and sold by Mitsui Petrochemical; the grafted polymer had a melt index of 3.0 g/10 min at 230°C and a density of 0.900 g/cm$^3$.

Primacor® 3460, a copolymer of ethylene and acrylic acid manufactured and sold by The Dow Chemical Company; this material contained 9.7 wt % acrylic acid monomer and had a melt index of 20 g/10 min.

Graft-modified substantially linear ethylene polymer; ENGAGE™ EG8200 polyolefin elastomer made by The Dow Chemical Company, as grafted with 1.3 weight percent maleic anhydride. The graft modified material had a melt index of 0.25 g/10 min and a density of 0.870 g/cm$^3$.

Profax® 6524, a polypropylene manufactured and sold by Himont; it had a melt index of 4 g/10 min at 230 °C and a density of 0.9 g/cm$^3$.

The graft-modified substantially linear ethylene polymer (referred to below as Insite™ Technology Polymer or ITP) was prepared according to the procedure described in USP 4,950,541. The polymer components were dry mixed at a certain weight ratio (as reported in Table 8), and were then fed into a Werner-Pfleiderer ZSK-30 twin-screw extruder operated at about 210°C. The blends were made in one extrusion pass.

TABLE 8

| Composition of Testing Samples | | | | |
| --- | --- | --- | --- | --- |
| Sample | Graft-Modified Polypropylene (Admer® QF 500A) | Polypropylene (Profax® 6524) | Graft-Modified Substantially Linear Ethylene-Polymer (ITP) | EAA (Primacor®) |
| C4 | 100 | --- | --- | --- |
| C5 | 50 | --- | --- | 50 |
| 5 | -- | --- | 50 | 50 |
| 6 | 50 | --- | 50 | --- |
| 7 | 50 | --- | 20 | 30 |

TABLE 8 (continued)

| Composition of Testing Samples | | | | |
|---|---|---|---|---|
| Sample | Graft-Modified Polypropylene (Admer® QF 500A) | Polypropylene (Profax® 6524) | Graft-Modified Substantially Linear Ethylene-Polymer (ITP) | EAA (Primacor®) |
| 8 | --- | 50 | 20 | 30 |

Injection molded samples were prepared using a 50 ton (45 tonne) Negri-Bossi Injection Molder operated with a barrel temperature between 200° and 250°C, a barrel pressure of (40 bars) 4 MPa, cooling mold temperature of (85°F) 29°C, and a residence time in the cooling mold of about 12 seconds. The samples were formed into 2.5" x 6.5" x 0.075" (5 cm x 17 cm x 0.19 cm) plaques.

The flex modulus and IZOD impact properties (at room temperature and -30°C) were measured for each of the samples in Table 8. These properties are important in many applications, for example, automobile parts. The properties were measured according to ASTM D-790 and D-256, respectively, and the results are reported in Table 9. Samples 6 and 7 exhibit very good low temperature impact properties, the result of the presence of the graft-modified substantially linear ethylene polymer.

TABLE 9

| Impact Properties and Flex Modulus | | | |
|---|---|---|---|
| Sample | Flex Modulus (kpsi/Pa) | IZOD at Room Temp (ft-lb per in/J per cm) | IZOD at -30 C (ft-lb per in / J per cm) |
| C4 | $135/9.31 \times 10^5$ | 8.3/4.4 | 0.55/0.29 |
| C5 | --- | 2.76/1/47 | 0.52/0.28 |
| 5 | $8/5.5 \times 10^4$ | 3.51/1.87 | 1.07/0.57 |
| 6 | $39/2.7 \times 10^5$ | 6.2/3.3 | 12.1/6.46 |
| 7 | $56/3.9 \times 10^5$ | 6.55/3.49 | 5.82/3.11 |
| 8 | $70/4.8 \times 10^5$ | 9.09/4.85 | 0.84/0.45 |

<u>Comparison of Impact and Other Properties of Specimans Made by Injection Molding of Blends of Polyester and Graft-Modified Substantially Linear Ethylene Polymer</u>

A blend containing 20% by wt substantially linear ethylene/1-octene polymer (ITP) grafted with about 1% maleic anhydride and 80% by wt polybutylene terephthlate (PBT) was compounded on a Welding Engineers counter-rotating twin screw extruder operated at 200 rpm using the temperature profile reported in Table 10.

TABLE 10

| Zone | Barrel Temp (°C) |
|---|---|
| 1 (feed) | 240 |
| 2 | 250 |
| 3 | 250 |
| 4 | 260 |
| 5 | 260 |
| 6 | 260 |
| 7 | 260 |
| die | 250 |

The ITP was prepared according to the methods taught in USP 5,272,236 and USP 5,278,272, and it was grafted with maleic anhydride as described in the Sample Preparation section above. Certain physical properties of these polymers are reported in Table 11 below. The PBT was Celenex® 2002 manufactured and sold by Hoechst Celenese Corporation. This polyester had a density of 1.31 g/cm$^3$ and a melt flow of 10 g/10 min (250°C, 2160 g). The Tafmer resin was the same as that used in Example C3 above, and it was grafted with maleic anhydride in the same manner as was the ITP.

TABLE 11

| Description of ITP and MAH-g-ITP Resins | | |
|---|---|---|
| Property | ITP | MAH-g-ITP |
| Melt Flow (g/10 min, $I_2$ @ 190°C) | 1.0 | 0.45 |
| Melt Flow (g/10 min, $I_{10}$ @ 190° C) | 7.42 | 5.22 |
| $I_{10}/I_2$ Ratio | 7.42 | 11.6 |
| Density (g/cm$^3$) | 0.87 | 0.87 |
| $M_w/M_n$ | 1.86 | 2.32 |
| Maleic Anhydride (wt %) | ---- | 0.95 |

The resulting blend strand was cooled by means of a water bath and pelletized using a chopper. The pellets were dried under vacuum and test specimens were injection molded on a Boy 30 ton (27 tonne) injection molder under the conditions reported in Table 12.

TABLE 12

| Boy Injection Molder | Operating Condition |
|---|---|
| Zone 1 | 250°C |
| Zone 2 | 260°C |
| Zone 3 | 260°C |
| nozzle | 260°C |
| injection pressure | 35-50 bar (3.5-5 MPa) |
| mold temperature | 70°C |
| cycle time | 20 sec |

The molder produced tensile and impact specimens which were tested using ASTM procedures. For purposes of comparison, specimens were also prepared from PBT, and an un-grafted ITP/PBT 20/80 blend. The results of various physical property evaluations are reported in Table 13.

TABLE 13

| Property | PBT | PBT/ITP | PBT/MAH-g-ITP |
|---|---|---|---|
| Weight % ITP | 0 | 20 | 20 |
| Yield Tensile (psi/kPa) | 8100/ 55850 | 4800/ 33090 | 5200/ 35850 |
| Break Tensile (psi/kPa) | 5800/ 39990 | 3300/ 22750 | 1800/ 12410 |
| Elongation (%) | 123 | 15 | 25 |
| Notched Izod (ft-lb per in/J per cm) | 1.2/0.64 | 1.5/0.80 | 12.1/6.46 |
| -30°C Dynatup (ft-lb/J) | 29.1/39.5 | 1.0/1.4 | 62.2/84.3 |

As can be seen in the reported impact data, the blends containing MAH-g-ITP demonstrate improved impact properties at ambient temperature and at -30°C.

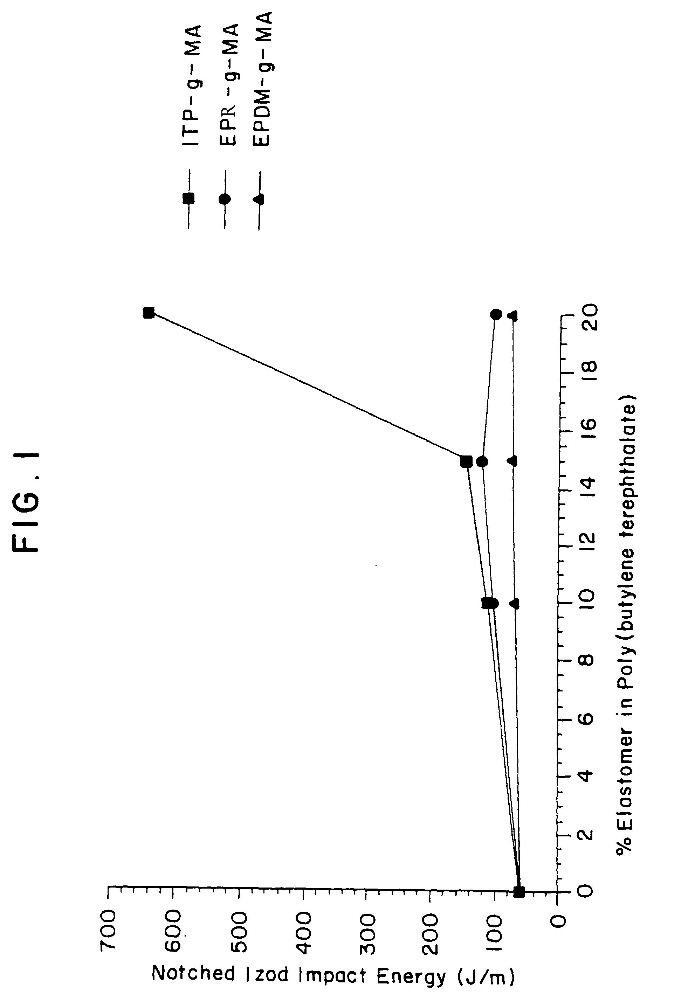

The notched IZOD impact energy was measured according to ASTM D-256 for the PBT, a 20/80 wt % blend of ITP/PBT, a 20/80 wt % blend of MAH-g-EPR/PBT, a 20/80 wt % blend of MAH-g-EPDM/PBT, a 20/80 wt % blend of MAH-g-ITP/PBT, a 10/10/80 wt % blend of ITP/MAH-g-ITP/PBT, and a 20/80 wt % blend of MAH-g-Tafmer/PBT. The measurements were made under ambient conditions, and the results are reported in Figure 1. The description of the MAH-g-EPDM, MAH-g-EPR, and MAH-g-Tafmer, as well as their notched IZOD impact energy, are reported in Table 14.

TABLE 14

| Description of Comparative Resins | | | |
|---|---|---|---|
| Property | MAH-g-EPDM[1] | MAH-g-EPR[2] | MAH-g-Tafmer[3] |
| Melt Flow (g/10 min) ($I_2$ @ 190°C) | 0.04 | 0.08 | 0.34 |
| Melt Flow (g/10 min) $I_{10}$ @ 190°C | 0.71 | 1.64 | 4.71 |
| $I_{10}/I_2$ Ratio | 17.7 | 20.5 | 13.8 |
| Density (g/cm$^3$) | 0.87 | 0.87 | 0.87 |
| Maleic Anhydride (wt %) | 0.50 | 0.70 | 1.1 |
| Notched IZOD (J/cm) | 0.75 | 1.1 | 1.5 |

[1] Ethylene-propylene diene elastomer functionalized with maleic anhydride and sold by Uniroyal Chemical (Product designated - ROYALTUF 465A).

[2] Ethylene-propylene elastomer functionalized with maleic anhydride and sold by Exxon Chemical (Product designated - Exxelor VA 1801).

[3] An ethylene-propylene elastomer (Tafmer P-0180 from Mitsui) graft modified with maleic anhydride as described above.

As can be seen from the results reported in Tables 13 and 14, the notched IZOD impact energy of the PBT blends of this invention incorporating 20 weight % of the MAH-grafted ITP is markedly greater than the comparative resins.

Figure 1 reports the notched IZOD impact energy under ambient conditions of several compositions in which the amount of elastomer in the PBT was varied. As reported, compositions containing MAH-g-ITP display a greater impact energy over a wide array or concentrations, and a decidedly greater impact energy when the concentration of the elastomer is in excess of 15 wt % of the composition.

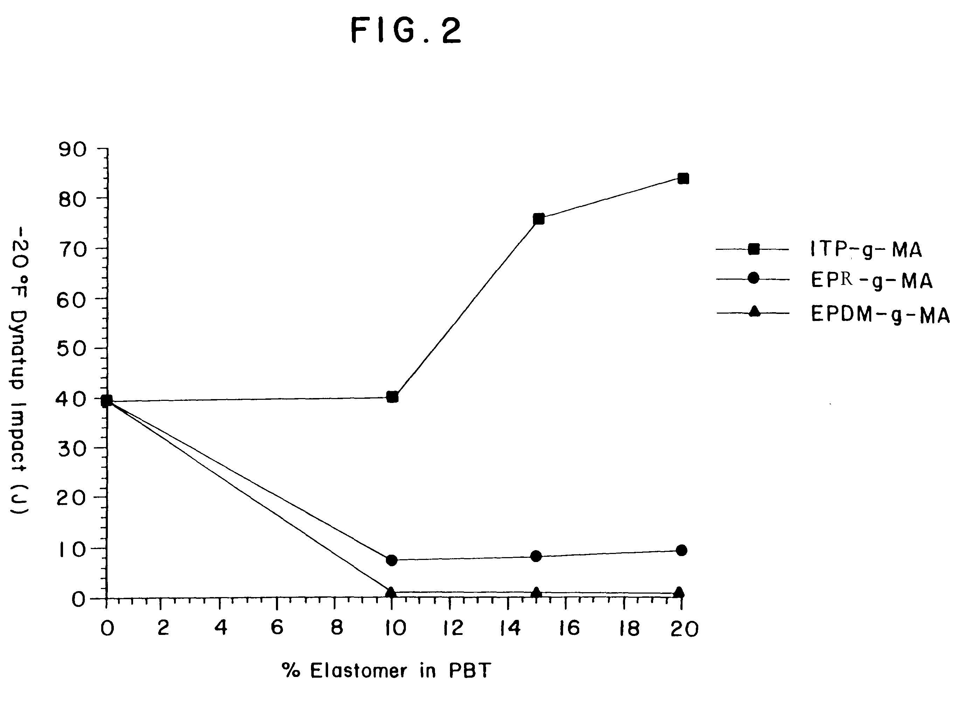

Figure 2 reports status similar to Figure 1 except the impact energy is measured on a Dynatup at -20°F (-29°C) using ASTM D-3763-86. At this low temperature, the composition containing MAH-g-ITP has marketedly improved impact resistence over the entire range of reported concentrations.

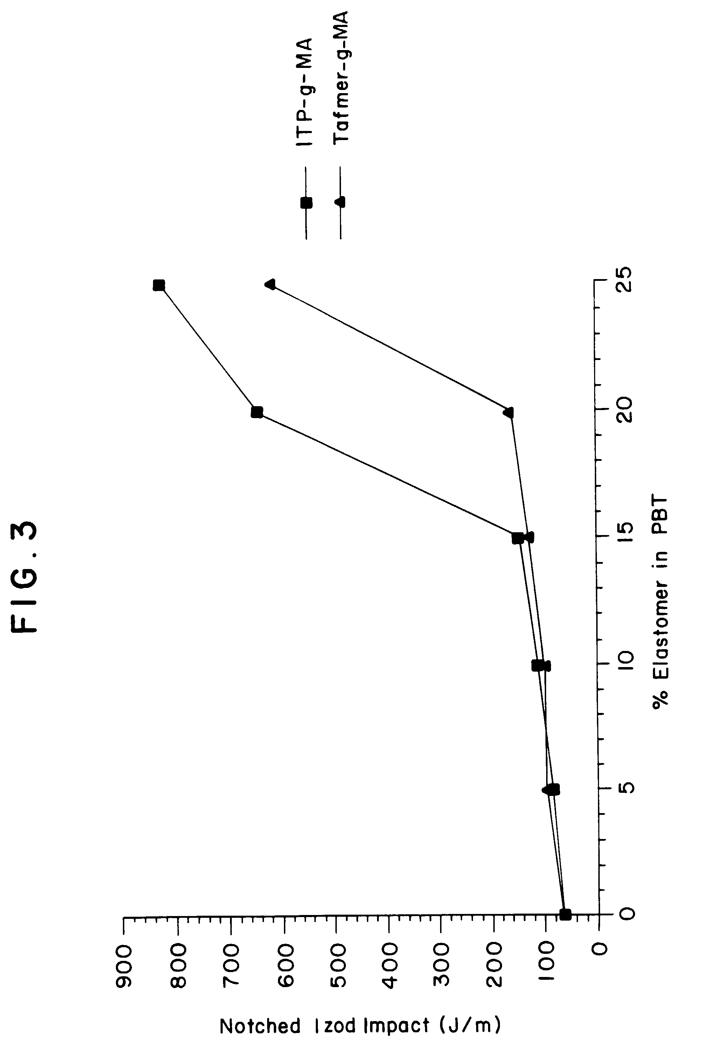

Figure 3 reports the effect of varying amounts of MAH-g-ITP and MAH-g-Tafmer in PBT and as evidenced by this report, concentrations of either in excess of 15 wt % increase notched IZOD impact energy of the blend, with the blend containing MAH-g-ITP exhibiting superior impact energy as between the two blends.

Polyamide-Polyolefin Compositions

Substantially homogeneous polyamide-polyolefin compositions were prepared using the polyolefins reported in Table 15 and the polyamides reported in Table 16. The polyamides were predried in an oven at 70°C for 24 hours.

TABLE 15

| Polyolefin Resins | | | |
|---|---|---|---|
| Description/Grade | Melt Flow $I_2$ @ 190°C | Density (g/cm$^3$) | MAH (wt %) |
| 1. MAH-g-EPDM is an ethylene/propylene/diene elastomer functionalized with maleic anhydride and sold by Uniroyal Chemical (ROYALTUF 465A). | 0.04 | 0.87 | 0.5 |
| 2. MAH-g-EPR is an ethylene/propylene elastomer modified with maleic anhydride and sold by Exxon Chemical (Exxelor VA 1801). | 0.08 | 0.87 | 0.7 |
| 3. MAH-g-ITP(1) is a substantially linear, homogeneous ethylene/1-octene polymer graft-modified with maleic anhydride. | 0.45 | 0.87 | 0.95 |
| 4. MAH-g-ITP(2) is a substantially linear, homogeneous ethylene/1-octene polymer graft-modified with maleic anhydride. | 0.46 | 0.91 | 1.3 |
| 5. ITP(A) is a substantially linear, homogeneous ethylene/1-octene polymer. | 5.0 | 0.87 | N/A |

TABLE 15   (continued)

| Polyolefin Resins | | | |
|---|---|---|---|
| Description/Grade | Melt Flow $I_2$ @ 190°C | Density (g/cm$^3$) | MAH (wt %) |
| 6. ITP(B) is a substantially linear, homogeneous ethylene/1-octene polymer. | 1.0 | 0.87 | N/A |
| MAH - maleic anhydride  N/A - not applicable | | | |

TABLE 16

| Typical Properties for Polyamide Resins (dry as molded) | | | | |
|---|---|---|---|---|
| DESCRIPTION/ GRADE | TENSILE (PSI//kPa) | YIELD (PSI/kPa) | ELONGATION (%) | NOTCHED IZOD RT- (ft-lb per in./J per cm) |
| Nylon 1000-1 is a low $M_w$ Nylon 6,6 from Hoechst-Celanese used for injection molding | 12,000/ 83,000 | 12,000/ 83,000 | 40-80 | 1.0/0.53 |
| Nylon 1200-1 is a high $M_w$ Nylon 6,6 from Hoechst-Celanese used for extrusion | 12,400/ 85,000 | --- | 75 | 1.3/0.69 |
| RT - room temperature | | | | |

The blend compositions reported in Table 17 were prepared by weighing the dried polyamide and polyolefin resins at the indicated proportions. Each of these dry blends were then melt blended on a 30 mm Werner-Pfleiderer twin screw extruder. The extruder melt temperatures were between 260° and 270°C. Each melt blended sample was pelletized and subsequently dried in a vacuum oven at 70°C for 24 hours before injection molding.

The dried melt blended samples were injection molded on a 55 ton (50 tonne) Neggi Bossi injection molder. An ASTM mold was used to obtain the injection molded test samples (that is tensile and IZOD bars). The injection molding temperatures were between 240° and 260°C. The ASTM mold temperature was set at 70°C. The molded test samples were equilibrated at 50% relative humidity, and then were tested.

TABLE 17

| Blended Compositions | | |
|---|---|---|
| Blend # | % Nylon 6,6 & Grade (by wt.) | % Polyolefin & Grade (by wt.) |
| Comparative 1 | 80% of 1000-1(low $M_w$) | 20% of MAH-g-EPR |
| Comparative 2 | 80% of 1000-1(low $M_w$) | 20% of MAH-g-EPDM |
| Comparative 3 | 80% of 1200-1(high $M_w$) | 20% of MAH-g-EPR |
| Comparative 4 | 80% of 1200-1(high $M_w$) | 20% of MAH-g-EPDM |
| Example 1 | 80% of 1000-1(low $M_w$) | 20% of MAH-g-TTP(1) |
| Example 2 | 80% of 1000-1(low $M_w$) | 20% of MAH-g-ITP(2) |
| Example 3 | 80% of 1200-1(high $M_w$) | 20% of MAH-g-ITP(1) |
| Example 4 | 80% of 1200-1(high $M_w$) | 20% of MAH-g-ITP(2) |
| Example 5 | 80% of 1000-1(low $M_w$) | 10% of MAH-G-ITP(1) plus |
| Example 6 | 80% of 1000-1(low $M_w$) | 10% ITP(A) 10% of MAH-g-ITP(1) plus 10% ITP(B) |
| Example 7 | 65% of 1000-1(low $M_w$) | 35% of MAH-g-ITP(1) |
| Example 8 | 65% of 1000-1(low $M_w$) | 35% of MAH-g-ITP(2) |

The test data obtained on the injection molded blend samples prepared from low molecular weight polyamide (that is Nylon 1000-1) and high molecular weight polyamide (that is Nylon 1200-1) resins are shown in Tables 18 and

EP 0 696 303 B1

TABLE 18

Test Data for Low $M_w$ Blend Compositions

Notched IZOD (ft-lb per in / J per cm)

| Blend # | 23 °C | 0 °C | -18 °C | -29 °C | -40 °C | Tensile (psi/ kPa) | Yield (psi/ kPa) | Elong (%) | WI | YI |
|---------|-------|------|--------|--------|--------|---------|---------|-------|------|------|
| Comp 1 | 17.7/ 9.44 | 5.6/ 2.99 | 3.4/ 1.8 | 2.3/ 1.2 | 2.6/ 11.4 | 6230/ 42950 | 6420/ 44260 | 66.5 | 24.6 | 14.9 |
| Comp 2 | 14.1/ 7.53 | 5.2/ 2.8 | 3.1/ 1.7 | 2.6/ 1.4 | 2.4/ 1.3 | 6070/ 41850 | 6580/ 45370 | 57.6 | <1.0 | 27.2 |
| Ex. 1 | 26.7/ 14.2 | 19.9 /10.6 | 6.8/ 3.6 | 4.7/ 2.5 | 3.8/ 2.0 | 7180/ 49500 | 6980/ 48130 | 117.1 | 29.0 | 12.7 |
| Ex. 2 | 23.6/ 12.6 | 8.5/ 4.5 | 3.1/ 1.6 | 2.7/ 1.4 | 2.4/ 11.3 | 7210/ 49710 | 7390/ 50950 | 98.9 | 36.8 | 7.2 |
| Ex. 5 | 19.5/ 10.4 | 15.7 /8.38 | 3.5/ 1.9 | 3.4/ 1.8 | 2.6/ 1.4 | 6370/ 43920 | 6750/ 46540 | 53.4 | 30.1 | 13.6 |
| Ex. 6 | 20.1/ 10.7 | 16.5/ 8.81 | 4.3/ 2.3 | 3.6/ 1.9 | 3.0/ 1.6 | 6490/ 44800 | 6790/ 46820 | 64.0 | 34.6 | 12.0 |
| Ex. 7 | 18.3/ 9.77 | 19.0/ 10.1 | 19.3/ 10.3 | 6.6/ 3.5 | 4.7/ 2.5 | 6370/ 44750 | 6753/ 46560 | 53.4 | -- | -- |
| Ex. 8 | 22.1/ 11.8 | 20.0/ 10.7 | 7.7/ 4.1 | 4.5/ 2.4 | 3.7/ 2.0 | 6500/ 44820 | 6792/4 6830 | 64.0 | -- | -- |
| Nylon 1000-1 (control) | 1.1/ 0.59 | --- | 0.8/ 0.4 | 1.0/ 0.53 | 0.9/ 0.5 | 12000/ 82740 | 12000/ 82740 | 40-80 | 41.2 | <1.0 |

TABLE 19

Test Data for High $M_w$-Polyamide Blend Compositions

| Blend # | Notched IZOD (ft-lb per in/J per cm) | | | | | Tensile (psi/kPa) | Yield (psi/kPa) | Elong. (%) |
|---|---|---|---|---|---|---|---|---|
| | 23 °C | 0 °C | -18 °C | -29 °C | -40 °C | | | |
| Comp. 3 | 21.7/11.6 | 17.0/9.50 | 5.2/2.8 | 3.1/1.7 | 2.0/1.5 | 7070/48750 | 7160/49370 | 95.7 |
| Comp. 4 | 18.9/10.0 | 16.5/8.81 | 4.9/2.6 | 3.3/1.8 | 2.7/1.4 | 6560/45230 | 7030/48470 | 59.6 |
| Ex. 3 | 22.2/11.8 | 20./10.9 | 15.4/8.22 | 4.6/2.5 | 3.1/1.7 | 7720/53230 | 7280/50190 | 124.1 |
| Ex. 4 | 20.9/11.2 | 15.3/8.17 | 4.3/2.3 | 2.8/1.5 | 2.5/1.3 | 8570/59090 | 7670/52880 | 174.2 |
| Nylon 1200-1 (control) | 1.3/0.69 | 1.1/0.58 | 1.2/0.64 | 1.3/0.69 | 0.9/0.48 | 12400/85490 | --- | 75.0 |

These IZOD impact data may be plotted as a function of temperature. From these plots, the ductile-brittle transition temperature (DBTT) value for each composition, for example, the temperature which marks the transition from ductile to brittle failure, can be calculated. A comparison of these DBTT values are reported in Tables 20 and 21.

TABLE 20

| Ductile-Brittle Transition Temperature Values for Low $M_w$ Nylon Blends | | | | |
|---|---|---|---|---|
| Blend # | DBTT (°C) | Dispersed Particle Size µm (microns) | | |
| | | Min. | - Max. | - Avg. |
| Comparative 1 | 8 | 0.10 | 2.5 | 0.5 |
| Comparative 2 | 5 | 0.17 | 10.0 | 1.0 |
| Example 1 | -12 | 0.05 | 1.3 | 0.3 |
| Example 2 | 3 | -- | -- | -- |

TABLE 20 (continued)

| Ductile-Brittle Transition Temperature Values for Low $M_w$ Nylon Blends | | | | |
|---|---|---|---|---|
| Blend # | DBTT (°C) | Dispersed Particle Size μm (microns) | | |
| | | Min. | - Max. | - Avg. |
| Example 5 | - 9 | -- | -- | -- |
| Example 6 | - 9 | -- | -- | -- |
| Example 7 | -27 | -- | -- | -- |
| Example 8 | -13 | -- | -- | -- |

TABLE 21

| Ductile-Brittle Transition Temperature Values for High $M_w$ Nylon Blends | | | | |
|---|---|---|---|---|
| Blend # | DBTT (°C) | Dispersed Particle Size μm (microns) | | |
| | | Min. | - Max. | - Avg. |
| Comparative 3 | - 11 | -- | -- | -- |
| Comparative 4 | - 10 | -- | -- | -- |
| Example 3 | - 26 | 0.05 | 1.0 | 0.1 |
| Example 4 | - 10 | -- | -- | -- |

The ductile-brittle transition temperatures clearly show that the compositions which contain the maleic anhydride graft-modified substantially linear, ethylene/octene polymers have superior low temperature toughness as compared to the other compositions evaluated. These unexpected results are especially evident for the compositions which contain the maleic anhydride graft-modified substantially linear ethylene/octene polymer having a low specific gravity (that is 0.870 g/cm$^3$). Compositions which exhibit low temperature toughness have commercial advantages over other compositions, especially those used in outdoor applications.

In addition, the comparative polyolefins must have a specific value of modulus and are not effective when used in small amounts for example, less than about 25 wt %. The IZOD impact data clearly show that maleic anhydride graft-modified substantially linear, ethylene/octene polymer can effectively impact modify polyamide-polyolefin resin compositions at reduced or low concentrations. At these reduced concentrations, these novel polyamide-polyolefin resin compositions exhibit the superior low temperature toughness that was previously not available. These improved properties are indicative of compositions having superior heat aging and weatherability performance.

## Claims

1.  A composition comprising a substantially homogeneous blend of at least one thermoplastic polymer and at least one substantially linear ethylene homo-, co- or interpolymer grafted with at least 0.01 wt.%, based on the weight of the grafted ethylene polymer, of an unsaturated organic compound containing at least one site of ethylenic unsaturation and at least one carboxyl group, the substantially linear ethylene homo-, co- or interpolymer characterized as having:

    (i) a melt flow ratio, $I_{10}/I_2$ from 6.5 to 15;
    (ii) a molecular weight distribution, $M_w/M_n$, of from 1.8 to 2.5 as measured by gel permeation chromatography;
    (iii) a density greater than 0.850 g/cm$^3$;
    (iv) a critical shear rate at onset of surface melt fracture of at least 50 percent greater than the critical shear rate at the onset of surface melt fracture of a linear olefin polymer having about the same $I_2$ and $M_w/M_n$; and
    (v) from 0.01 to 3 long chain branches/ 1000 carbons wherein a long chain branch has a chain length of at least 6 carbon atoms.

2.  The composition of claim 1 in which the substantially linear ethylene co- or interpolymer comprises between 95 and 50 wt.% polymerized ethylene monomer and between 5 and 50 wt.% of at least one polymerized alpha-olefin comonomer of 3 to 20 carbon atoms.

3. The composition of claim 2 in which the substantially linear ethylene co- or interpolymer has a density between 0.860 and 0.935 g/cm$^3$.

4. The composition of claim 3 in which the substantially linear ethylene polymer has a melt index from 0.5 to 200 g/10 min.

5. The composition of claim 4 in which the substantially linear ethylene co- or interpolymer is an interpolymer of ethylene and at least one comonomer selected from the group consisting of propylene, 1-butene, 1-hexene, 4-methyl-1-pentene, and 1-octene.

6. The composition of claim 5 in which the substantially linear ethylene to-or interpolymer is a copolymer of ethylene and 1-butene, 1-hexene, 4-methyl-1-pentene or 1-octene.

7. The composition of claim 1 in which the substantially linear ethylene co- or interpolymer is a copolymer of ethylene and 1-octene.

8. The composition of claim 1 in which the unsaturated organic compound is selected from the group consisting of maleic, acrylic, methacrylic, itaconic, crotonic, alpha-methyl crotonic and cinnamic acids, anhydrides, ester and their metal salts, and fumaric acid and its ester and metal salts.

9. The composition of claim 5 in which the unsaturated organic compound is maleic anhydride.

10. The composition of claim 1 in which the grafted unsaturated organic compound is between 0.05 and 10% of the weight of the grafted polymer.

11. The composition of claim 1 in which the thermoplastic polymer comprises at least one of a polyurethane, polycarbonate, polystyrene, polyester, epoxy, polyamide and a polyolefin containing polar groups.

12. The composition of claim 11 further comprising a nongrafted substantially linear ethylene homo-, co- or interpolymer.

13. The composition of claim 1 in which the thermoplastic polymer is a polyester.

14. The composition of claim 1 in which the thermoplastic polymer is a polyamide.

15. The composition of claim 1 in which the thermoplastic polymer is at least one of EAA, EVA, ECO, EPCO and ECOAA.

16. The composition of claim 1 further comprising filler.

17. The composition of claim 16 in which the filler is at least one of silica, talc, glass, clay, and carbon black.

**Patentansprüche**

1. Zusammensetzung, umfassend eine im wesentlichen homogene Mischung von wenigstens einem thermoplastischen Polymeren und wenigstens einem im wesentlichen linearen Ethylen-homo-, -co- oder -interpolymeren, gepfropft mit wenigstens 0,01 Gew.-%, bezogen auf das Gewicht des gepfropften Ethylenpolymeren, von wenigstens einer ungesättigten organischen Verbindung, welche wenigstens einen Platz von ethylenartiger Unsättigung und wenigstens eine Carboxylgruppe enthält, wobei das im wesentlichen lineare Ethylen-homo-, -co- oder -interpolymere dadurch gekennzeichnet ist, daß es aufweist:

(i) ein Schmelzflußverhältnis, $I_{10}/I_2$, von 6,5 bis 15;
(ii) eine Molekulargewichtsverteilung, $M_w/M_n$, von 1,8 bis 2,5, gemessen durch Gelpermeationschromatographie;
(iii) eine Dichte größer als 0,850 g/cm$^3$;

(iv) eine kritische Scherrate beim Beginn von Oberflächenschmelzbruch von wenigstens 50 % größer als die kritische Scherrate beim Beginn von Oberflächenschmelzbruch eines linearen Olefinpolymeren, das etwa denselben $I_2$ und dieselbe $M_w/M_n$ hat; und

(v) von 0,01 bis 3 Langkettenverzweigungen/1000 Kohlenstoffe, wobei eine Langkettenverzweigung eine Kettenlänge von wenigstens 6 Kohlenstoffatomen hat.

2. Zusammensetzung nach Anspruch 1, in welcher das im wesentlichen lineare Ethylen-co- oder -interpolymere zwischen 95 und 50 Gew.-% polymerisiertes Ethylenmonomeres und zwischen 5 und 50 Gew.-% wenigstens eines polymerisierten alpha-Olefincomonomeren von 3 bis 20 Kohlenstoffatomen umfaßt.

3. Zusammensetzung nach Anspruch 2, in welcher das im wesentlichen lineare Ethylen-co- oder -interpolymere eine Dichte zwischen 0,860 und 0,935 g/cm³ hat.

4. Zusammensetzung nach Anspruch 3, in welcher das im wesentlichen lineare Ethylenpolymere einen Schmelzindex von 0,5 bis 200 g/10 min hat.

5. Zusammensetzung nach Anspruch 4, in welcher das im wesentlichen lineare Ethylen-co- oder -interpolymere ein Interpolymeres von Ethylen und wenigstens einem Comonomeren, ausgewählt aus der aus Propylen, 1-Buten, 1-Hexen, 4-Methyl-1-penten und 1-Octen bestehenden Gruppe, ist.

6. Zusammensetzung nach Anspruch 5, in welcher das im wesentlichen lineare Ethylen-co- oder -interpolymere ein Copolymeres von Ethylen und 1-Buten, 1-Hexen, 4-Methyl-1-penten oder 1-Octen ist.

7. Zusammensetzung nach Anspruch 1, in welcher das im wesentlichen lineare Ethylen-co- oder -interpolymere ein Copolymeres von Ethylen und 1-Octen ist.

8. Zusammensetzung nach Anspruch 1, in welcher die ungesättigte organische Verbindung aus der Gruppe ausgewählt ist, die aus Malein-, Acryl-, Methacryl-, Itacon-, Croton-, alpha-Methyl-croton- und Zimmt-säuren, -säureanhydriden, -säureestern und deren Metallsalzen und Fumarsäure und ihren Estern und Metallsalzen besteht.

9. Zusammensetzung nach Anspruch 8, in welcher die ungesättigte organische Verbindung Maleinsäureanhydrid ist.

10. Zusammensetzung nach Anspruch 1, in welcher die gepfropfte ungesättigte organische Verbindung zwischen 0,05 und 10 % des Gewichtes des gepfropften Polymeren ausmacht.

11. Zusammensetzung nach Anspruch 1, in welcher das thermoplastische Polymere wenigstens eines von einem Polyurethan, Polycarbonat, Polystyrol, Polyester, Epoxy, Polyamid und einem polare Gruppen enthaltenden Polyolefin umfaßt.

12. Zusammensetzung nach Anspruch 11, weiter umfassend ein nicht-gepfropftes im wesentlichen lineares Ethylen-homo-, -co- oder -interpolymeres.

13. Zusammensetzung nach Anspruch 1, in welcher das thermoplastische Polymere ein Polyester ist.

14. Zusammensetzung nach Anspruch 1, in welcher das thermoplastische Polymere ein Polyamid ist.

15. Zusammensetzung nach Anspruch 1, in welcher das thermoplastische Polymere wenigstens eines von EAA, EVA, ECO, EPCO und ECOAA ist.

16. Zusammensetzung nach Anspruch 1, weiter umfassend Füllstoff.

17. Zusammensetzung nach Anspruch 16, in welcher der Füllstoff wenigstens einer von Siliziumdioxid, Talkum, Glas, Ton und Ruß ist.

## Revendications

1. Composition comprenant un mélange pratiquement homogène d'au moins un polymère thermoplastique et d'au

EP 0 696 303 B1

moins un homopolymère, copolymère ou interpolymère d'éthylène pratiquement linéaire sur lequel on a greffé au moins 0,01 % en poids, par rapport au poids de polymère d'éthylène de greffage, d'un composé organique insaturé contenant au moins un site d'insaturation éthylénique et au moins un groupe carboxyle, l'homopolymère, le copolymère ou l'interpolymère d'éthylène pratiquement linéaire étant caractérisé en ce qu'il présente :

(i) un rapport d'indices de fluidité à chaud, $I_{10}/I_2$, allant de 6,5 à 15 ;
(ii) un indice de polydispersité, $M_p/M_n$, allant de 1,8 à 2,5, tel que mesuré par chromatographie par perméation de gel ;
(iii) une masse volumique supérieure à 0,850 g/cm$^3$ ;
(iv) une vitesse de cisaillement critique au début de la rupture superficielle à l'état fondu d'au moins 50 % supérieure à la vitesse de cisaillement critique au début de la rupture superficielle à l'état fondu d'un polymère d'oléfine linéaire ayant les mêmes $I_2$ et $M_p/M_n$ ; et
(v) de 0,01 à 3 ramifications à chaîne longue/1000 atomes de carbone, dans lequel une ramification à chaîne longue présente une longueur de chaîne correspondant à au moins 6 atomes de carbone.

2. Composition selon la revendication 1, dans laquelle le copolymère ou l'interpolymère d'éthylène pratiquement linéaire comprend de 95 à 50 % en poids d'éthylène monomère polymérisé, et de 5 à 50 % en poids d'au moins un comonomère de type alpha-oléfine polymérisé comportant de 3 à 20 atomes de carbone.

3. Composition selon la revendication 2, dans laquelle le copolymère ou l'interpolymère d'éthylène pratiquement linéaire présente une masse volumique allant de 0,860 à 0,935 g/cm$^3$.

4. Composition selon la revendication 3, dans laquelle le polymère d'éthylène pratiquement linéaire présente un indice de fluidité à chaud allant de 0,5 à 200 g/10 min.

5. Composition selon la revendication 4, dans laquelle le copolymère ou l'interpolymère d'éthylène pratiquement linéaire est un interpolymère d'éthylène et d'au moins un comonomère choisi dans l'ensemble constitué par le propylène, le 1-butène, le 1-hexène, le 4-méthyl-1-pentène et le 1-octène.

6. Composition selon la revendication 5, dans laquelle le copolymère ou l'interpolymère d'éthylène pratiquement linéaire est un copolymère d'éthylène et de 1-butène, de 1-hexène, de 4-méthyl-1-pentène ou de 1-octène.

7. Composition selon la revendication 1, dans laquelle le copolymère ou l'interpolymère d'éthylène pratiquement linéaire est un copolymère d'éthylène et de 1-octène.

8. Composition selon la revendication 1, dans laquelle le composé organique insaturé est choisi dans l'ensemble constitué par les acides maléique, acrylique, méthacrylique, itaconique, crotonique, alpha-méthylcrotonique et cinnamique, leurs anhydrides, leurs esters et leurs sels métalliques, et l'acide fumarique, ses esters et ses sels métalliques.

9. Composition selon la revendication 8, dans laquelle le composé organique insaturé est l'anhydride maléique.

10. Composition selon la revendication 1, dans laquelle le composé organique insaturé greffé constitue de 0,05 à 10 % du poids du polymère de greffage.

11. Composition selon la revendication 1, dans laquelle le polymère thermoplastique comprend au moins l'un des polyuréthane, polycarbonate, polystyrène, polyester, époxyde, polyamide et une polyoléfine comportant des groupes polaires.

12. Composition selon la revendication 11, comprenant en outre un homopolymère, copolymère ou interpolymère d'éthylène pratiquement linéaire qui n'a pas subi de greffage.

13. Composition selon la revendication 1, dans laquelle le polymère thermoplastique est un polyester.

14. Composition selon la revendication 1, dans laquelle le polymère thermoplastique est un polyamide.

15. Composition selon la revendication 1, dans laquelle le polymère thermoplastique est au moins l'un des polymère éthylène/acide acrylique (EAA), polymère éthylène/acétate de vinyle (EVA), polymère éthylène/monoxyde de carbone (ECO), polymère éthylène/propylène/monoxyde de carbone (EPCO) et polymère éthylène/monoxyde de carbone/acide acrylique (ECOAA).

16. Composition selon la revendication 1, comprenant en outre une charge.

17. Composition selon la revendication 16, dans laquelle la charge est au moins l'un des silice, talc, verre, argile et noir de carbone.

# FIG. 1

Legend:
- ITP-g-MA (■)
- EPR-g-MA (●)
- EPDM-g-MA (▲)

X-axis: % Elastomer in Poly(butylene terephthalate)

Y-axis: Notched Izod Impact Energy (J/m)

EP 0 696 303 B1

# FIG. 2

EP 0 696 303 B1

# FIG.3

EP 0 696 303 B1